(19) Europäisches Patentamt
European Patent Office
Office européen des brevets

(11) **EP 1 810 569 B1**

(12) **EUROPÄISCHE PATENTSCHRIFT**

(45) Veröffentlichungstag und Bekanntmachung des Hinweises auf die Patenterteilung:
**21.03.2018  Patentblatt 2018/12**

(51) Int Cl.:
***A01N 25/08*** *(2006.01)*

(21) Anmeldenummer: **06126845.4**

(22) Anmeldetag: **21.12.2006**

(54) **Pflanzenschutzmittelabsorbate und Erzeugnisse für den Pflanzenschutz**

Absorbates of plant protecting agents and products for protecting plants

Absorbats des agents phytosanitaires et produits pour la protection des plantes

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **20.01.2006  DE 102006002765**

(43) Veröffentlichungstag der Anmeldung:
**25.07.2007  Patentblatt 2007/30**

(73) Patentinhaber: **Evonik Degussa GmbH**
**45128 Essen (DE)**

(72) Erfinder:
• **Heindl, Frank**
  **63517 Rodenbach (DE)**
• **Drexel, Claus-Peter**
  **63263 Neu-Isenburg (DE)**

(56) Entgegenhaltungen:
**EP-A1- 1 488 697     WO-A1-99/17868**
**DE-A1- 1 619 865**

**Beschreibung**

Die vorliegende Erfindung betrifft neuartige Absorbate mit einer speziellen Zusammensetzung, insbesondere einer hohen Beladung mit zur Verwendung in Pflanzenschutzmitteln bestimmten Substanzen, die Verwendung eines speziellen Verfahrens zur Herstellung der erfindungsgemäßen Absorbate sowie Erzeugnisse für den Pflanzenschutz, enthaltend die erfindungsgemäßen Absorbate.

Im Bereich der Erzeugnisse für den Pflanzenschutz wird zwischen festen und flüssigen Formulierungstypen unterschieden. Im Bereich der festen Formulierungen werden flüssige oder schmelzbare Wirkstoffe zusammen mit Hilfsstoffen (zum Beispiel Tensiden und Sprengmitteln) auf Trägermaterialien aufgezogen. Bei festen Wirkstoffen dienen diese Trägermaterialien dabei in erster Linie als Füllstoff, während sie bei flüssigen oder niedrig schmelzenden Wirkstoffen die Flüssigkeit aufnehmen. Dadurch sollen leicht handhabbare, äußerlich trockene Absorbate erhalten werden, die dann entweder als Pulver direkt (sogenannte WP, Wettable Powder) oder, weiterverarbeitet, als Granulate/Extrudate (WG, Water Dispersable Granules) auf den Markt kommen.

Im Falle von WG's wird ein zuvor hergestelltes Absorbatpulver in Granulatform gebracht oder die Produktkomponenten direkt verformt (bspw. durch Sprühtrocknung). Eine Möglichkeit zur Herstellung von WG's durch direkte Sprühtrocknung einer Dispersion von Silica, Wirkstoff und weiteren Hilfsstoffen wird bspw. in der US 6869914 beschrieben.

Insbesondere bei flüssigen oder niedrig schmelzenden Pflanzenschutzmittelwirkstoffen und -hilfsstoffen, die im Folgenden "zur Verwendung in Pflanzenschutzmitteln bestimmte Substanzen" genannt werden, ist es mit den bislang bekannten Verfahren nicht möglich, Absorbate mit einem gewünscht hohen Gehalt an zur Verwendung in Pflanzenschutzmitteln bestimmten Substanzen herzustellen. So können mittels herkömmlicher Verfahren nur bis zu 65 %-ige Absorbate (bezogen auf eine Flüssigkeitsdichte von 1,00 g / ml) mit ausreichender Fließfähigkeit hergestellt werden.

Bei mechanischen Absorptions-Verfahren, wie bspw. einfachem Mischen der Komponenten, ist im Bereich der Grenzbeladung der Kieselsäure mit einer sehr breiten Agglomeratverteilung der Absorbate zu rechnen welche die Fließfähigkeit der Produkte stark einschränkt und dadurch das weitere Handling (Dosieren etc.) erschwert. Weiterhin ist es bei herkömmlichen Mischerverfahren schwierig, Verdichtungsagglomeration zu vermeiden, jedoch gerade solche Verdichtungsagglomerate sind bspw. beim Einsatz des Produkts als WP unerwünscht da sie das gewünschte gute Zerfallsverhalten beim Redispergieren in Wasser negativ beeinflussen.

Aus DE 1 619 865 ist die Anwendung amorphen Kieselsäure mit hohem DBP-Wert und Schüttgewicht von 78g/l als Trägerfüllstoff für hochprozentige Spritzpulver Formulierungen von Pestiziden bekannt. Nachteile der Absorbate des Standes der Technik sind weiterhin ein teilweise aufwendiges Herstellungsverfahren und insbesondere der hohe Anteil an teuren Trägerstoffen, zu denen auch Trägerkieselsäuren zählen. Insbesondere bei Erzeugnissen für den Pflanzenschutz, welche in sehr großen Mengen produziert und vertrieben werden, würde selbst eine geringe Reduktion der Mengen der verwendeten Trägerstoffen bereits einen enormen ökonomischen und auch ökologischen Vorteil erbringen.

Aufgabe der vorliegenden Erfindung war es daher, neuartige Absorbate zur Verfügung zu stellen, welche zumindest einige der Nachteile der Absorbate des Standes der Technik nicht oder nur in verringertem Maße aufweisen und welche es erlauben, neuartige Erzeugnisse für den Pflanzenschutz herzustellen.

Diese Aufgabe und weitere nicht explizit genannte Aufgaben werden durch die in den Ansprüchen, der Beschreibung und den Beispielen näher definierten Absorbate und Erzeugnisse für den Pflanzenschutz sowie das dort näher definierte Verfahren zu deren Herstellung gelöst.

Überraschender Weise wurde gefunden, dass es durch die Verwendung eines speziellen Verfahrens zum Aufziehen von Flüssigkeiten auf Trägermaterialien in Kombination mit der Auswahl von speziellen Trägermaterialien möglich ist, Absorbate mit einem Gehalt an, zur Verwendung in Pflanzenschutzmitteln bestimmten, Substanzen von zumindest 70 % bezogen auf das Gesamtgewicht der Absorbate und auf eine Flüssigkeitsdichte von 1,00 g / ml herzustellen. Durch die Verwendung von ganz speziellen Trägermaterialien kann neben der hohen Beladung auch eine besonders gute, d. h. vollständig oder weitestgehend vollständige, Desorption nach Redispergierung in Wasser erreicht werden.

Die erfindungsgemäßen Absorbate haben den Vorteil dass sie im Vergleich zu Absorbaten des Standes der Technik eine wesentlich höhere Beladung mit absorbierten zur Verwendung in Pflanzenschutzmitteln bestimmten Substanzen aufweisen und dennoch äußerlich trocken, druckstabil und gut fließfähig sind.

Durch die Verwendung spezieller Trägermaterialien sowie Fällungskieselsäuren in Kombination mit der hohen Beladung kann zudem ein vorteilhaft niedriger Preis für die Absorbate erzielt werden. Ferner gelingt es den Erfordernissen und den Auflagen des Umweltschutzes gerecht zu werden, da es sich bei diesen Trägermaterialien um ökologisch unbedenkliche Trägermaterialien handelt.

Als besonderer Vorteil von Fällungskieselsäuren, pyrogenen Kieselsäuren und Kieselgelen als Trägermaterial erwies sich, dass deren physikalisch-chemische Eigenschaften zielgerichtet auf den zu absorbierenden Pflanzenschutzmittel bzw. ein Stoffgemisch enthaltend einen Pflanzenschutzmittel angepaßt werden können. Insbesondere haben die Erfinder herausgefunden, dass Fällungskieselsäuren, pyrogene Kieselsäuren und Kieselgele mit einer speziellen Porenverteilung in Kombination mit dem erfindungsgemäß verwendeten Herstellungsverfahren zu Absorbaten führte, die sowohl eine hohe Beladung als auch hervorragende Desorbtionseigenschaften aufweisen. Als ganz besonders vorteilhaft erwiesen sich hierbei Fällungskieselsäuren mit spezieller Porenverteilung.

Ein weiterer Vorteil der erfindungsgemäßen Absorbate ist, dass diese auch mit Pflanzenschutzmitteln hergestellt werden können, die bislang nur unzureichend in Form von Absorbaten gebracht werden konnten. Der Grund hierfür ist, dass durch den Einsatz des "Concentrated Powder Form (CPF)-Prozess keine hohen Trocknungstemperaturen benötigt werden.

Schließlich weisen die erfindungsgemäßen Absorbate eine vorteilhafte Agglomeratgrößenverteilung auf.

Gegenstand der vorliegenden Erfindung sind daher Absorbate, dadurch gekennzeichnet, dass sie

zumindest ein Trägermaterial ausgewählt aus der Gruppe bestehend aus Fällungskieselsäuren, pyrogenen Kieselsäuren, Kieselgelen, natürlichen Tonen, modifizierten natürlichen Tonen und Diatmoeenerde,
sowie
zumindest eine flüssigen in Pflanzenschutzmittelwirkstoff oder ein Stoffgemisch enthaltend zumindest eine flüssigen Pflanzenschutzmittelwirkstoff, enthalten, und
dass der Anteil des flüssigen Pflanzenschutzmittelwirkstoff bzw. bei Gemischen von zumindest zwei flüssigen Pflanzenschutzmittelwirkstoffen, die Gesamtmenge der flüssigen Pflanzenschutzmittelwirkstoffe, $X_{norm.}$ = 70 % bis 99 % beträgt, und das Trägermaterial einen Anteil an Mikroporenvolumen bezogen auf das Gesamtporenvolumen kleiner gleich 10 Vol % hat.

Ebenfalls Gegenstand der vorliegenden Erfindung sind Erzeugnisse für den Pflanzenschutz umfassend zumindest ein erfindungsgemäßes Absorbat, sowie die Verwendung eines erfindungsgemäßen Absorbats, zur Herstellung von Erzeugnissen für den Pflanzenschutz.

Weiterhin ist Gegenstand der vorliegenden Erfindung die Verwendung zumindest einer Fällungskieselsäure, pyrogenen Kieselsäure, Kieselgels, mit einem Anteil an Mikroporenvolumen bezogen auf das Gesamtporenvolumen kleiner gleich 10 Vol %, zur Herstellung von Absorbaten, beladen mit flüssigem Pflanzenschutzmittelwirkstoff, bzw. Gemischen von zumindest zwei flüssigen Pflanzenschutzmittelwirkstoffen, wobei die Gesamtmenge der flüssigen Pflanzenschutzmittelwirkstoffen, von $X_{norm.}$ = 70 % bis 99 % beträgt.

Gegenstand der vorliegenden Erfindung ist ein Verfahren zur Herstellung von erfindungsgemäßen festen Pflanzenschutzmittelabsorbaten und/oder Erzeugnissen für den Pflanzenschutz, umfassend zumindest die Schritte:

- Bereitstellen einer Flüssigkeit, enthaltend mindestens eine flüssigen Pflanzenschutzmittelwirkstoff und/oder zumindest ein flüssiges Stoffgemisch, umfassend mindestens ein flüssigen Pflanzenschutzmittelwirkstoff in einem Vorlagebehälter,
- Mischen und/oder teilweises Auflösen eines Gases, bevorzugt unter erhöhtem Druck, besonders bevorzugt im überkritischen Zustand, insbesondere $CO_2$ bei einem Druck p > 73,83 bar und einer Temperatur T > 31,04°C, in der Flüssigkeit, bevorzugt in einem Mischer und/oder Druckbehälter,
- Zuführen der Flüssigkeits/Gas-Lösung/Schmelze zu einem Entspannungsorgan,
- Leiten der Flüssigkeits/Gas-Lösung bzw. der Flüssigkeits/Gas-Schmelze durch ein Entspannungsorgan zur Entspannung der Flüssigkeits/Gas-Lösung bzw. der Flüssigkeits/Gas-Schmelze,
- Zumischen von zumindest einem festen, pulverförmigen Träger, mit einem Anteil an Mikroporenvolumen bezogen auf das Gesamtporenvolumen kleiner gleich 10 Vol %, zu der entspannten Flüssigkeits/Gas-Lösung bzw. der Flüssigkeits/Gas-Schmelze.

Schließlich ist Gegenstand der vorliegenden Erfindung ein Verfahren umfassend die Verwendung, des zuvor genannten Verfahrens zur Herstellung von Absorbaten, beladen mit Pflanzenschutzmitteln, und die anschließende Weiterverarbeitung dieser Absorbate zu Erzeugnissen für den Pflanzenschutz.

Die Gegenstände der vorliegenden Erfindung werden nachfolgend im Detail beschrieben, wobei zunächst einige verwendete Begriffe definiert werden.

Als Pflanzenschutzmittel im Sinne der vorliegenden Erfindung sind flüssige Pflanzenschutzmittelwirk stoffe zu verstehen.

Pflanzenschutzmittelwirkstoffe sind Stoffe, welche eine direkte oder indirekte biologische Aktivität gegenüber Schädlingsbefall oder Krankheiten von Pflanzen besitzen oder die den Stoffwechsel oder das Wachstum der Pflanzen beeinflussen. Dazu zählen Wirkstoffe, die geeignet sind einen Schädlingsbefall zu verhindern, zu kontrollieren oder zu bekämpfen und/oder Schäden bzw. Krankheiten an Pflanzen, Holz oder Holzprodukten die während des Wachstums, der Produktion, der Verarbeitung, der Lagerung, des Transports oder der Vermarktung auftreten können zu verhindern zu regulieren oder zu minimieren und/oder die Einwirkungen von Insekten, Spinnentieren oder sonstigen Schädlingen auf Nutztiere, welche mit den Pflanzen gefüttert werden, zu regulieren, zu minimieren oder zu verhindern. Dies schließt Wirkstoffe ein, die für den Gebrauch als Insekten- oder Betriebswachstumsregler bestimmt sind sowie Entlaubungsmittel, Trocknungsmittel, Mittel für die Einstellung, Abschwächung oder das Verhindern des vorzeitigen Verfalls der Frucht und Substanzen zur Anwendung an Getreide, entweder vor oder nach der Ernte, um das Erntegut vor Beeinträchtigung während der Lagerung und des Transportes zu schützen. Weitere Details zur Definition, Nomenklatur und Charakterisierung von Pflanzenschutzmittelwirkstoffen kann dem Handbuch "PESTICIDE SPECIFICATIONS" Manual on Development and Use of FAO and WHO Specifications for Pesticides, Herausgegeben durch die World Health Organisation (WHO) und die FOOD and Agriculture Organization of the United States, Rom, 2002, ISBN 92-5-104857-6, entnommen werden. Bei den Pflanzenschutzmittelwirkstoffen handelt es sich um flüssige oder niedrig schmelzende Wirkstoffe, wie Sie beispielsweise dem CIPAC-Handbuch H, Pflanzenschutzmittelhilfsstoffe sind der EP 1 319 336 A1, zu entnehmen. Bevorzugt handelt es sich bei diesen Hilfsstoffen um flüssige, niederigschmelzende, oder im Wirkstoff lösliche Hilfsstoffe. Insbesondere bevorzugt als Hilfsstoffe sind:

- Tenside gemäß EP 1 319 336 A1, Absätze 0030 und 0038 bis 0041
- Puffersubstanzen gemäß EP 1 319 336 A1, Absatz 0048
- Antischaummittel gemäß EP 1 319 336 A1, Absatz 0043

Für die Bestimmung des Gehalts an Pflanzenschutzmittel ist folgendes zu beachten. Poröse Strukturen absorbieren immer volumenbezogen. Folglich resultieren bei der Verwendung von Flüssigkeiten mit höherer Dichte in der Regel höhere Masse-Beladungen im Vergleich zu Flüssigkeiten mit niedriger Dichte. Um vergleichbare Angaben machen zu können wird daher im Rahmen der vorliegenden Erfindung der Anteil an zur Verwendung in Pflanzenschutzmitteln bestimmter Substanz als Massenkonzentration bezogen auf eine Flüssigkeitsdichte von 1,00 g/ml und das Gesamtgewicht des Absorbats, angegeben.

Die Normierung auf eine Flüssigkeitsdichte von 1,00 g/ml erfolgt gemäß Formel (I):

$$X_{norm} = \frac{100}{\rho_{Fl.} * \left( \frac{100}{X_{vor}} - 1 \right) + 1} \qquad \textbf{Formel (I)}$$

mit

$X_{norm.}$ = Massekonzentration normiert auf eine Flüssigkeitsdichte von 1,00 g/ml, angegeben in %.

$$X_{norm} = \frac{100}{\rho_{Fl.} * \left( \frac{100}{X_{vor}} - 1 \right) + 1} \qquad \text{Formel (I)}$$

mit

$X_{norm.}$ = Massekonzentration normiert auf eine Flüssigkeitsdichte von 1,00 g/ml, angegeben in %.
$X_{vor}$ = Massenkonzentration vor Normierung in %
$\rho_{Fl.}$ = Dichte des absorbierten Pflanzenschutzmittels oder des diesen enthaltenden Stoffgemisches in g/ml.

Die Massebeladung vor der Normierung wird nach Formel (II) wie folgt berechnet:

$$X_{vor} = \frac{m_{Fl.abs.}}{m_{Abs.gesamt}} * 100\% \qquad \text{Formel (II)}$$

mit

$m_{Fl.abs}$ = Masse des absorbierten Pflanzenschutzmittels in g
$m_{Abs.gesamt}$ = Gesamtmasse des Absorbats in g

Die Normierung ist - wie bereits angedeutet - notwendig, da ohne die Berücksichtigung der Dichte der absorbierten Flüssigkeit keine Aussage darüber getroffen werden kann, wie stark das Trägermaterial wirklich beladen ist. So ist der Träger bei einem Absorbat, in dem 50 g Trägermaterial 50 g einer Flüssigkeit mit der Dichte von 1,00 g/ml absorbiert hat, weit stärker beladen - er muss mehr Flüssigkeitsvolumen aufnehmen - als ein Träger in einem Absorbat, in dem 50 g Trägermaterial 50 g einer Flüssigkeit mit der Dichte von 1,30 g/ml absorbiert hat. $X_{norm.}$ beschreibt somit die Massekonzentration eines Absorbates einer Flüssigkeit mit der Dichte 1 g/cm$^3$, das das gleiche Volumen Flüssigkeit beinhaltet, wie das tatsächliche Absorbat. Dies hat zur Folge, dass für eine Flüssigkeitsdichte von $\rho_{Fl.} = 1$ die normierte Massebeladung $X_{norm.}$ gleich der Massebeladung vor der Normierung $X_{vor.}$ ist. Wird jedoch eine Flüssigkeit mit einer Dichte von 1,30 g/ml absorbiert, so ist die normierte Massebeladung $X_{norm.}$ kleiner als die Massebeladung vor der Normierung $X_{vor.}$. In diesem Fall wird somit dem Umstand Rechnung getragen, dass der Träger wegen der Flüssigkeitsdichte von 1,30 g/ml weniger Volumen an Flüssigkeit aufnehmen musste und somit insgesamt ein höheres Beladungspotential mit dieser Flüssigkeit zur Verfügung steht.

Folgende Rechenbeispiele sollen dies näher verdeutlichen:

Rechenbeispiel 1:

Ein 70 %iges Absorbat aus einer zur Verwendung in Pflanzenschutzmitteln bestimmten Flüssigkeit mit einer Dichte von 1,23 g/ml entspricht nach Normierung auf eine Flüssigkeitsdichte von 1,00 g/ml einem Absorbat mit einer Massebeladung von

$$X_{norm.} = 100/(1,23*((100/70)-1)+1) = 65,48\ \%.$$

Rechenbeispiel 2:

116,7 g einer Flüssigkeit mit einer Dichte von 1,30 g/ml werden absorbiert auf 50 g Kieselsäure. Daraus ergibt sich

$$X_{vor} = 116,7 / (116,7 + 50) * 100 = 70\ \%$$

Dies wiederum entspricht einer normierten Beladung von:

$$X_{norm.} = 100/(1,30*((100/70)-1)+1) = 64,22\ \%.$$

Die erfindungsgemäßen Absorbate, beladen mit Pflanzenschutzmitteln, zeichnen sich dadurch aus, dass

- zumindest ein Trägermaterial ausgewählt aus der Gruppe bestehend aus Fällungskieselsäure, pyrogenen Kieselsäuren, Kieselgelen, natürlichen Tonen, modifizierten natürlichen Tonen, Diatmoeenerde, enthalten ist,
- als Wirkstoff zumindest einen Pflanzenschutzmittel oder ein Stoffgemisch enthaltend zumindest einen Pflanzenschutzmittel, enthalten ist, und
- dass der Anteil an zur Verwendung in Pflanzenschutzmitteln bestimmten Substanzen bzw. bei Gemischen von zumindest zwei zur Verwendung in Pflanzenschutzmitteln bestimmten Substanzen, die Gesamtmenge an zur Verwendung in Pflanzenschutzmitteln bestimmte Substanzen , von $X_{norm.} = 70$ Gew.-% bis 99 Gew.-% beträgt.

Bevorzugt weist das Trägermaterial eine Stampfdichte kleiner 200 g/l, ganz besonders bevorzugt < 150 g/l und insbesondere < 100 g/l. Besonders bevorzugt enthalten die erfindungsgemäßen Absorbate zumindest, eine Fällungskieselsäure, pyrogene Kieselsäure oder ein Kieselgel als Trägermaterial.

Das Trägermaterial weist einen

- Anteil des Mikroporenvolumens bezogen auf das Gesamtporenvolumen von kleiner gleich 10 Vol %, bevorzugt kleiner gleich 7 Vol %, besonders bevorzugt kleiner gleich 5 Vol % und insbesondere 0,01 bis 5 Vol %
- und ggf, eine DBP-Absorption größer gleich 150 g / 100 g, bevorzugt zwischen 200 und 450 g / 100 g auf.

Es handelt sich bei dem Trägermaterial um eine Fällungskieselsäure, eine pyrogene Kieselsäure oder ein Kieselgel und insbesondere bevorzugt um eine Fällungskieselsäure.

Die Oberfläche der Trägermaterialien, insbesondere von Kieselsäuren und Kieselgelen, kann mit einem Oberflächenmodifizierungsagens behandelt sein. Es kann sich somit z. B. um hydrophobe oder teilhydrophobe Trägerstoffe handeln.

Die Menge $X_{norm}$ an Pflanzenschutzmitteln bzw. bei Gemischen von zumindest zwei Pflanzenschutzmitteln, die Gesamtmenge an Pflanzenschutzmitteln, beträgt bevorzugt zwischen. 70 und 95 %, besonders bevorzugt zwischen 75 und 95 % und insbesondere zwischen 81 und 90 %.

Es ist bevorzugt, dass die erfindungsgemäßen Absorbate nur das Trägermaterial und das/die Pflanzenschutzmittel enthalten. Bevorzugt liegen die erfindungsgemäßen Absorbate in Form von

- festen Formulierungen für den direkten Einsatz wie "dustable powders" (DP), "powders for dry seed treatment" (DS), "granules" (GR), "tablets for direct Application" (DT)
- festen Formulierungen zur Dispersion wie "wettable powders" (WP), "water dispersible powders for seed treatment" (WS), "water dispersible granules" (WG), "water dispersible tablets" (WT), "emulsufiable granules" (EG), "emulsifiable powders" (EP)
- festen Formulierungen zur Auflösung vor der Applikation wie "water soluble powders" (SP), "water soluble powders for seed treatment" (SS), "water soluble granules" (SG) "water soluble tablets" (ST) vor.

Besonders bevorzugt sind WG oder WP-Formulierungen.

Die zuvor genannten Formulierungsformen und insbesondere die verwendeten Abkürzungen entsprechen dem international anerkannten Sprachgebrauch. Details können dem Handbuch "PESTICIDE SPECIFICATIONS" Manual on Development and Use of FAO and WHO Specifications for Pesticides, herausgegeben durch die World Health Organisation (WHO) und die FOOD and Agriculture Organization of the United States, Rom, 2002, ISBN 92-5-104857-6, Anhang E, entnommen werden.

Besonders bevorzugt sind WG oder WP-Formulierungen.

Die zuvor genannten Formulierungsformen und insbesondere die verwendeten Abkürzungen entsprechen dem international anerkannten Sprachgebrauch. Details können dem Handbuch "PESTICIDE SPECIFICATIONS" Manual on Development and Use of FAO and WHO Specifications for Pesticides, herausgegeben durch die World Health Organisation (WHO) und die FOOD and Agriculture Organization of the United States, Rom, 2002, ISBN 92-5-104857-6, Anhang E, entnommen werden. Zur Herstellung der erfindungsgemäßen Absorbate kann ein Verfahren verwendet werden, welches zumindest die folgenden Schritte umfasst:

- Bereitstellen einer Flüssigkeit, enthaltend mindestens ein flüssigen Pflanzenschutzmittelwirkstoff und/oder zumindest ein flüssiges Stoffgemisch, umfassend mindestens ein flüssigen Pflanzenschutzmittelwirkstoff, in einem Vorlagebehälter,
- Mischen und/oder teilweises Auflösen eines Gases, bevorzugt unter erhöhtem Druck, besonders bevorzugt im überkritischen Zustand, insbesondere $CO_2$ bei einem Druck p > 73,83 bar und einer Temperatur T > 31,04°C, in der Flüssigkeit, bevorzugt in einem Mischer und/oder Druckbehälter
- Zuführen der Flüssigkeits/Gas-Lösung/Schmelze zu einem Entspannungsorgan.
- Leiten der Flüssigkeits/Gas-Lösung bzw. der Flüssigkeits/Gas-Schmelze durch ein Entspannungsorgan zur Entspannung der Flüssigkeits/Gas-Lösung bzw. der Flüssigkeits/Gas-Schmelze
- Zumischen von zumindest einem festen, pulverförmigen Trägers mit einem Anteil an Mikroporenvolumen bezogen auf das Gesamtporenvolumen kleiner gleich 10 Vol %, zu der entspannten Flüssigkeits/Gas-Lösung bzw. der Flüssigkeits/Gas-Schmelze.

Als Träger bzw. als zur Verwendung in Pflanzenschutzmitteln bestimmte Substanz bestimmte Substanzen können die zuvor bei der Beschreibung der erfindungsgemäßen Absorbate definierten Stoffe eingesetzt werden.

Im erfindungsgemäßen anwendbaren Verfahren können verschiedenen Gase verwendet werden.

Als Gas kann im Prinzip jedes Gas verwendet werden, das sich ausreichend in der zu pulverisierenden Flüssigkeit, enthaltend mindestens eine flüssige oder geschmolzene, zur Verwendung in Pflanzenschutzmitteln bestimmte, Substanz und/oder zumindest ein flüssiges oder geschmolzenes Stoffgemisch, umfassend mindestens eine zur Verwendung in Pflanzenschutzmitteln bestimmte, Substanz, löst. Beispielsweise können als Gas Kohlendioxid, ein Kohlenwasserstoff, insbesondere Methan, Ethan, Propan, Butan, Ethen, Propen oder ein halogenierter Kohlenwasserstoff, ein Ether, ein Inertgas, insbesondere Stickstoff, Helium oder Argon, ein gasförmiges Oxid, insbesondere Distickstoffoxid oder Schwefeldioxid, und Ammoniak verwendet werden. Auch kann eine Mischung aus zwei oder mehreren der vorgenannten Gase verwendet werden.

Das Auflösen des Gases bzw. das Vermischen des Gases mit der Flüssigkeit, enthaltend mindestens einen Pflanzenschutzmittel und/oder zumindest ein flüssiges oder geschmolzenes Stoffgemisch umfassend mindestens einen Pflanzenschutzmittel, kann auf unterschiedliche Weise erfolgen. So ist es möglich, das Auflösen bzw. das Vermischen in einem druckstabilen, optional beheizbaren Vorlagebehälter, z. B. einen geeigneten Autoklaven, durchzuführen. Es ist aber auch möglich, das Vermischen bzw. Auflösen in einem optional beheizbaren Mischaggregat, insbesondere einem statischen Mischer durchzuführen, der einem optional beheizbaren, druckstabilen Vorlagebehälter nachgeschaltet ist.

In einer besonderen Ausführungsform wird auf die Verwendung eines druckstabilen, optional beheizbaren Vorlagebehälters verzichtet. Stattdessen wird die Flüssigkeit, enthaltend mindestens einen flüssigen oder geschmolzenen Pflanzenschutzmittel und/oder zumindest ein flüssiges oder geschmolzenes Stoffgemisch umfassend mindestens einen Pflanzenschutzmittel, in einem beliebig dimensionierten, ggf. beheizbaren Vorlagebehälter vorgelegt und mittels einer geeigneten Pumpe einem geeigneten Mischaggregat, z. B. einem statischen Mischer, zugeführt wo die Flüssigkeit mit dem Gas gemischt wird bzw. das Gas in der Flüssigkeit gelöst wird. Das Flüssigkeits/Gas-Gemisch bzw. die Flüssigkeit/Gas-Lösung/Schmelze kann anschließend direkt einem Entspannungsorgan zugeführt werden.

Kombinationen der zuvor beschriebenen Verfahren sind ebenfalls möglich.

Das Mischen bzw. Auflösen des Gases in der Flüssigkeit erfolgt bevorzugt bei erhöhtem Druck.

Der erhöhte Druck, unter dem das Gas in dem flüssigen Stoff oder Stoffgemisch aufgelöst wird, kann im Bereich von 5 bar bis 800 bar liegen, beträgt jedoch bevorzugt 10 bar bis 350 bar und besonders bevorzugt im Bereich von 20 bar bis 250 bar.

Vorzugsweise wird das Auflösen des Gases in dem flüssigen Stoff oder Stoffgemisch durch Vermischen des Gases mit dem flüssigen Stoff oder Stoffgemisch beschleunigt. Dieses Vermischen kann beispielsweise durch ein Schütteln oder Rollen eines Behälters erfolgen, in dem das Gas und die Flüssigkeit zusammengeführt werden. Dies kann z. B. ein Druckbehälter sein, in dem die zu pulverisierende Flüssigkeit vorgelegt ist. Alternativ kann die Flüssigkeit/Schmelze während des Zusammenführens und/oder nach der Zusammenführung mit dem Gas gerührt werden. Eine noch andere Möglichkeit, eine gute Durchmischung der zu pulverisierenden Flüssigkeit/Schmelze mit dem Gas zu erreichen, besteht im Umpumpen der Flüssigkeit/Schmelze und /oder der Gasphase in unterschiedliche Behälter oder im Rezirkulieren der Flüssigkeit/Schmelze und /oder der Gasphase, d. h. aus dem Druckbehälter abzupumpen und dem Druckbehälter im Bereich der jeweils anderen Phase wieder zuzuführen. Eine besonders bevorzugte Möglichkeit ist die Verwendung eines statischen Mischers. Wobei ganz besonders bevorzugt die Flüssigkeit/Schmelze und die Gasphase erst direkt im Mischer und/oder am Eingang des Mischers zusammengeführt werden. Die vorgenannten Ausführungsformen können auch kombiniert werden.

Es kann notwendig sein, dass verschiedene Teile der Anlage extern beheizbar sein müssen, um den Pflanzenschutzmittel in flüssige Form zu bringen bzw. darin zu halten. Dazu kann es notwendig sein, z. B. Vorratsbehälter, Zuleitungen, Mischer, Entspannungsorgan und Ventile mit geeigneten Heizmöglichkeiten auszustatten. So kann es beispielsweise notwendig sein, dass die Zuleitungen zwischen dem Vorlagebehälter und dem Mischer und/oder zwischen dem Mischer und dem Entspannungsorgan und/oder dem Vorlagebehälter und dem Entspannungsorgan und/oder der Vorlagebehälter selbst und/oder der Mischer und/oder das Entspannungsorgan beheizt werden müssen um die Flüssigkeit, enthaltend mindestens einen flüssigen oder geschmolzenen Pflanzenschutzmittel und/oder zumindest eines flüssigen oder geschmolzenen Stoffgemisch umfassend mindestens einen Pflanzenschutzmittel oder das Gemisch aus besagter Flüssigkeit und dem Gas in flüssigem Zustand zu halten. Bevorzugt wird hierbei mit Temperaturen bis 80 °C gearbeitet.

Als Entspannungsorgan kann im erfindungsgemäßen Verfahren jede Vorrichtung verwendet werden, die eine ausreichend schnelle Entspannung der Flüssigkeits/Gas-Lösung ermöglicht. Bevorzugt wird als Entspannungsorgan eine Düse, ein Diffusor, eine Kapillare, eine Blende, ein Ventil oder eine Kombination der vorgenannten Entspannungsorgane verwendet.

Bei dem Entspannen der Flüssigkeits/Gas-Lösung/Schmelze kann die Erstarrungstemperatur des Stoffes oder Stoffgemisches unterschritten werden, jedoch ist dies nicht unbedingt erforderlich, um das gewünschte, pulverförmige Produkt zu erhalten. Es hat sich bei einer Reihe von Anwendungsfällen allerdings als günstig herausgestellt, beim Entspannen der Flüssigkeits/Gas-Lösung eine Temperatur zu erreichen, die zumindest in die Nähe der Erstarrungstemperatur des Stoffes oder Stoffgemisches liegt.

Es ist bei dem erfindungsgemäßen Verfahren wichtig, dass das zugegebene feste, pulverförmige Trägermaterial mit der Flüssigkeits/Gas-Lösung/Schmelze bzw. - je nachdem wo die Zuführung des pulverförmigen Hilfsstoffs erfolgt - mit der zu pulverisierenden Flüssigkeit, enthaltend mindestens einen flüssigen oder geschmolzenen Pflanzenschutzmittel und/oder zumindest ein flüssiges oder geschmolzenes Stoffgemisch, umfassend mindestens einen Pflanzenschutzmittel vermischt wird.

Um eine gute Durchmischung des Trägermaterials mit der Flüssigkeits/Gas-Lösung/Schmelze bzw. der zu pulverisierenden Flüssigkeit, enthaltend mindestens einen flüssigen oder geschmolzenen Pflanzenschutzmittel und/oder zumindest ein flüssiges oder geschmolzenes Stoffgemisch, umfassend mindestens einen Pflanzenschutzmittel, zu erreichen, stehen verschiedene Möglichkeiten zur Verfügung. So kann das pulverförmige Trägermaterial beispielsweise dort zudosiert werden, wo die Flüssigkeits/Gas-Lösung/Schmelze aus dem Entspannungsorgan austritt, also an oder kurz vor der Entspannungsstelle. Das Trägermaterial wird dann in dem sich nach der Entspannungsstelle bildenden Freistrahl mitgerissen, wobei die starke und schnelle Volumenexpansion des in der Flüssigkeits/Gas-Lösung/Schmelze enthaltenen Gases für eine äußerst intensive Verwirbelung und Vermischung des Trägers mit dem zu pulverisierenden Flüssigkeit, enthaltend mindestens einen flüssigen oder geschmolzenen Pflanzenschutzmittel und/oder zumindest ein flüssiges oder geschmolzenes Stoffgemisch, umfassend mindestens einen Pflanzenschutzmittel, sorgt.

Gemäß einer anderen Ausführungsform des erfindungsgemäßen Verfahrens wird der Träger derart zugeführt, dass er den aus dem Entspannungsorgan austretenden Stoffstrom im Bereich der Austrittsstelle ringförmig umgibt. Dies kann z. B. mit einer ringförmigen Düse erfolgen, so dass der aus dem Entspannungsorgan austretenden Freistrahl zumindest teilweise vom Trägermaterial umhüllt ist. Die Umhüllung des Freistrahles mit dem Träger sorgt zudem dafür, dass kurz nach dem Austritt aus dem Entspannungsorgan eventuell noch vorhandene Flüssigkeitströpfchen sich nicht an einer umgebenden Wandung ablagern können, sondern mitgerissen werden.

Es kann sinnvoll sein, den aus dem Entspannungsorgan austretenden Stoffstrom und den Träger einem Diffusor zuzuführen um die Aufweitung des Freistrahles kontrollieren zu können. Weiterhin können zusätzlich eine oder mehrere Strömungsabrisskanten, mit den dort entstehenden Verwirbelungen, eine noch intensivere Durchmischung zwischen dem Freistrahl und dem Träger bewirken.

In einer bevorzugten Ausführungsform des erfindungsgemäßen Verfahrens erfolgt die Entspannung der Flüssigkeits/Gas-Lösung/Schmelze in einem Sprühturm. Der zuzumischende Träger kann dann beispielsweise mittels dem Fachmann bekannter Verfahren, z. B. mittels einer Fördeschnecke oder pneumatischer Förderung, in den Sprühturm transportiert und an der gewünschten Stelle zudosiert werden.

Bei bevorzugten Ausführungsformen des erfindungsgemäßen Verfahrens wird zusätzlich zu dem Gas, das bereits in der Flüssigkeit, enthaltend mindestens einen flüssigen oder geschmolzenen Pflanzenschutzmittel und/oder zumindest ein flüssiges oder geschmolzenes Stoffgemisch, umfassend mindestens einen Pflanzenschutzmittel, gelöst ist, weiteres Gas, das als sogenanntes Überschussgas bezeichnet werden kann, zugegeben. Dies kann besonders bevorzugt im Bereich des Entspannungsorgans erfolgen. Mit diesem Überschussgas lässt sich die beim Entspannungsvorgang erreichte Temperatur unabhängiger einstellen. Weder ist es erforderlich, dass die Flüssigkeits/Gas-Lösung/Schmelze im wesentlichen mit dem Gas gesättigt ist, noch muss beispielsweise ein relativ hoher Druck gewählt werden, um eine zur gewünschten Abkühlung ausreichend große Gaskonzentration in der Flüssigkeit zu erreichen. Vielmehr kann die gewünschte Abkühlung im Bereich der Entspannungsstelle weitgehend durch die schnelle Entspannung des zusätzlich zugeführten Überschussgases hervorgerufen werden. Darüber hinaus ergibt sich die Möglichkeit, als Überschussgas ein Gas zu wählen, das verschieden von dem in der Flüssigkeit ausgelösten Gas ist. Beispielsweise kann das Überschussgas im Hinblick auf eine möglichst große Temperaturabsenkung ausgewählt werden, während das in der Flüssigkeit aufzulösende Gas nach anderen Gesichtspunkten festgelegt wird. Neben einer besseren Abkühlung im Bereich der Entspannungsstelle führt das Überschussgas auch zu einer noch besseren Durchmischung bzw. Verwirbelung nach dem Austritt des Stoffstroms aus dem Entspannungsorgan und damit zu noch kleineren Pulverpartikeln.

Hinsichtlich der Zuführung des Überschussgases bestehen verschiedene Möglichkeiten. Gemäß einer Ausgestaltung des erfindungsgemäßen Verfahrens wird das Überschussgas zwischen dem Druckbehälter und dem Entspannungsorgan, insbesondere kurz vor der Entspannungsstelle, in die Flüssigkeits/Gas-Lösung/Schmelze eingespeist. Hierbei kann zur besseren Vermischung mit der Flüssigkeits/Gas-Lösung/Schmelze beispielsweise ein statischer Mischer eingesetzt werden.

Gemäß einer anderen Ausgestaltung werden in dem Entspannungsorgan mittels einer Zweistoffdüse die Flüssigkeits/Gas-Lösung/Schmelze und zusätzlich zugeführtes Überschussgas gemeinsam miteinander entspannt. Bei dieser Ausgestaltung wird das Überschussgas also nicht der Flüssigkeits/Gas-Lösung/Schmelze zugegeben, sondern direkt an der Entspannungsstelle zugeführt, so dass die Flüssigkeits/Gas-Lösung/Schmelze und das reine Überschussgas gleichzeitig entspannt werden. Die Zweistoffdüse kann beispielsweise derart sein, dass die Flüssigkeits/Gas-Lösung/Schmelze durch einen zentralen Kanal austritt, während das Überschussgas durch einen Ringkanal austritt, der den zentralen Kanal koaxial umgibt.

Gemäß einer noch anderen Ausgestaltung wird das Überschussgas zusammen mit dem festen, pulverförmigen Hilfsstoff der Lösung bzw. dem Stoff oder Stoffgemisch zugeführt.

Das erfindungsgemäße Verfahren kann sowohl kontinuierlich als auch diskontinuierlich betrieben werden. Für den kontinuierlichen Betrieb kann es notwendig sein, den Auffangbehälter, z. B. Sprühturm, für die erfindungsgemäßen Absorbate mit einer geeigneten Einrichtung zur kontinuierlichen Ausführung der erfindungsgemäßen Absorbate zu versehen. Hierzu sind dem Fachmann geeignete Techniken, z. B. Förderschnecken oder Zellradschleusen bekannt.

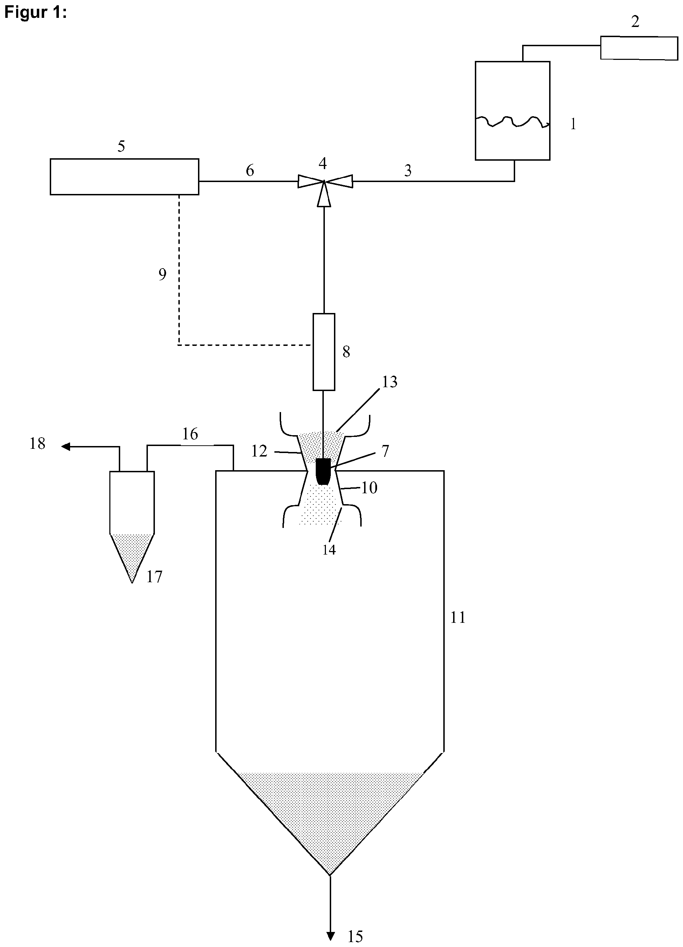

Wie zuvor bereits angedeutet sind mehrere zweckmäßige Ausführungsformen des erfindungsgemäßen Verfahrens möglich. Figur 1 zeigt eine mögliche Ausführungsform, in der ein Autoklav zum Mischen bzw. Auflösen des Gases mit/in der Flüssigkeit, enthaltend mindestens einen flüssigen oder geschmolzenen Pflanzenschutzmittel und/oder zumindest ein flüssiges oder geschmolzenes Stoffgemisch, umfassend mindestens einen Pflanzenschutzmittel, verwendet wird.

Figur 1 zeigt als Druckbehälter einen Autoklav 1, in den die zu pulverisierende Flüssigkeit, enthaltend mindestens einen Pflanzenschutzmittel und/oder zumindest ein flüssiges oder geschmolzenes Stoffgemisch, umfassend mindestens einen Pflanzenschutzmittel, eingefüllt wird. Anschließend wird durch geeignete Maßnahmen, beispielsweise durch Bewegen des Autoklaven 1 oder des Autoklaveninhaltes (z. B. durch Rühren oder Umpumpen), ein ausgewähltes Gas in der vorgelegten Flüssigkeit unter Druck aufgelöst. Die Zuführung des ausgewählten Gases erfolgt auf herkömmliche Weise und ist in der Figur nicht dargestellt. Zur Beschleunigung des Auflösens von Gas in der zu pulverisierenden Flüssigkeit können die Flüssigkeit und das darin aufzulösende Gas optional im Gleichstrom durch einen statischen Mischer 2 geführt und anschließend in den Autoklaven 1 eingeleitet werden. Je nach Art des ausgewählten Gases und abhängig von dem gewählten Druck sowie der Temperatur können in der flüssigen Phase Gaskonzentrationen zwischen 1 und 90 Gew.-%, vorzugsweise 5 bis 50 Gew.-% und insbesondere 10 bis 40 Gew.-% erreicht werden. Die Temperatur liegt zweckmäßigerweise im Bereich der Raum- bzw. Umgebungstemperatur, jedoch kann bei hochviskosen Stoffen oder Stoffgemischen auch eine höhere Temperatur erforderlich sein. Wesentlich ist, dass die zu pulverisierende Flüssigkeit, enthaltend mindestens einen Pflanzenschutzmittel und/oder zumindest ein flüssiges oder geschmolzenes Stoffgemisch, umfassend mindestens einen Pflanzenschutzmittel, im Druckbehälter als Flüssigkeit oder Suspension oder Schmelze vorliegt.

Die nach dem Auflösen des Gases im Autoklaven 1 vorhandene Flüssigkeits/Gas-Lösung wird über eine Leitung 3 einem Dreiwegeventil 4 zugeführt. Aus einem Gasbehälter 5 wird über eine Leitung 6 zusätzliches Gas, sogenanntes Überschussgas, dem Dreiwegeventil 4 zugeführt. Das Überschussgas kann ein anderes als das in der Flüssigkeit aufgelöste Gas sein.

Aus dem Dreiwegeventil 4 werden die Flüssigkeits/Gas-Lösung sowie das zugeführte Überschussgas einem Entspannungsorgan zugeleitet, das hier eine Hochdruckdüse 7 ist. Zwischen der Hochdruckdüse 7 und dem Dreiwegeventil 4 kann ein weiterer statischer Mischer 8 vorgesehen sein, um die Einmischung des Überschussgases in die Flüssigkeits/Gas-Lösung zu verbessern. Es ist aber auch möglich, den Inhalt des Autoklaven 1 sowie das Überschußgas, über die Leitung 9, jeweils direkt dem statischen Mischer 8 zu zuführen und erst dort zu durchmischen. Die Hochdruckdüse 7 ist an der engsten Stelle eines Diffusers 10 angeordnet, der im Deckel eines Sprühturms 11 befestigt ist. Über einen mit dem Diffusor 10 verbundenen Trichter 12 wird ein festes, pulverförmiges Trägermaterial 13 kontinuierlich zugegeben, solange die Flüssigkeits/Gas-Lösung/Schmelze und das Überschussgas aus der Hochdruckdüse 7 ausströmen. Zwischen der Hochdruckdüse 7 und der Innenwald des Trichters 12 bzw. des Diffusors 10 ist ein sich zunächst verengender, dann wieder erweiternder Ringspalt gebildet, durch den der zugegebene Hilfsstoff 13 strömt. Der Hilfsstoff umgibt also den aus der Hochdruckdüse 7 ausströmenden Stoffstrom ringförmig. Die Förderung des Hilfsstoffes 13 in den Trichter 12 kann mittels bekannter Methoden erfolgen, beispielsweise mittels pneumatischer Förderung, durch Rüttelschienen, mittels eines Schneckendosierers, einer Zellradschleuse oder ähnlichem.

Die starke Volumenzunahme des in der Flüssigkeits/Gas-Lösung/Schmelze enthaltenen Gases sowie des zusätzlich zugeführten Überschussgases nach dem Austritt aus der Hochdruckdüse 7 führt zu einer starken Turbulenz und damit zu einer guten Durchmischung des Hilfsstoffs mit dem aus der Hochdruckdüse 7 austretenden Stoffstrom. Im gezeigten Ausführungsbeispiel erhöht eine im Diffusor vorhandene Strömungsabrisskante 14 die Turbulenz noch.

Die starke Abkühlung, die mit der Entspannung des in der Flüssigkeit gelösten Gases sowie des Überschussgases einhergeht, sorgt zusammen mit der erwähnten, hohen Turbulenz für eine so schnell und intensive Durchmischung mit dem Hilfsstoff, dass bereits bei einer Sprühturmhöhe von nur 1 m das gewünschte pulverförmige Endprodukt erhalten wird. Das Pulver sammelt sich im unteren Teil des Sprühturm 11 und kann am Ausgang 15 auf herkömmliche Art, optional kontinuierlich oder diskontinuierlich, entnommen werden.

Das in der Flüssigkeit gelöste Gas sowie das Überschussgas trennen sich nach dem Austritt aus der Hochdruckdüse 7 von dem zu pulverisierenden Stoff oder Stoffgemisch. Im gezeigten Ausführungsbeispiel wird das solchermaßen freigesetzte Gas im oberen Bereich des Sprühturms 11 durch eine Leitung 16 abgezogen. Durch die zwischen dem Diffusor 10 und der Sprühturminnenwand vorhandene Beruhigungszone wird ein Austrag feiner Partikel durch die Leitung 16 vermieden. Ein gegebenenfalls dennoch in dem abgesaugten Gas enthaltener Feinanteil pulverisierten Produkts kann auf übliche Weise, z. B. mittels Zyklons 17, noch vor einem mit 18 bezeichneten Sauggebläse aus dem Gasstrom abgetrennt werden. Details des zuvor beschriebenen Verfahrens können der WO 99/17868 entnommen werden.

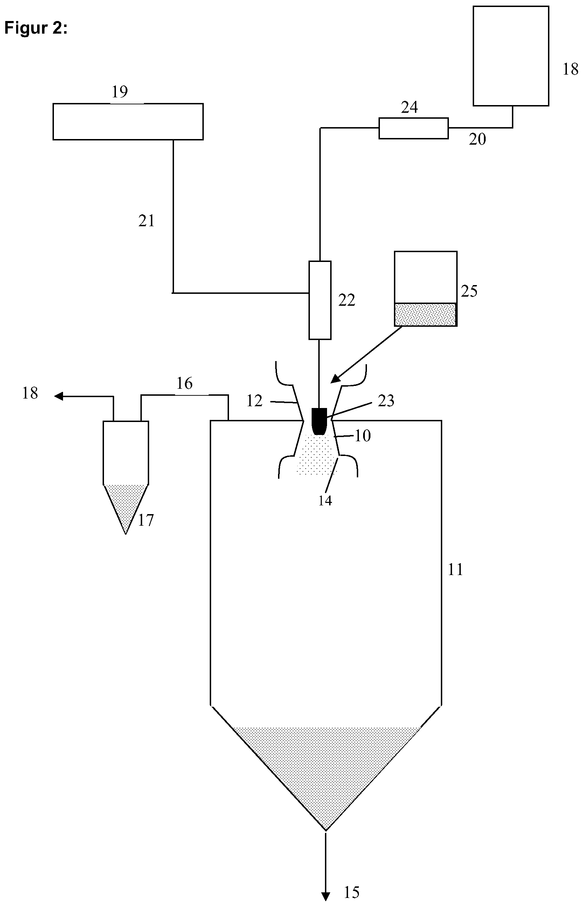

Eine weitere, besonders bevorzugte Ausführungsform des erfindungsgemäßen Verfahrens wird in Figur 2 dargestellt.

Das Verfahren gemäß Figur 2 unterscheidet sich von dem Verfahren gemäß Figur 1 dadurch, dass auf die Verwendung eines Autoklaven verzichtet wird. Statt dessen werden die Flüssigkeit, enthaltend mindestens einen flüssigen oder geschmolzenen Pflanzenschutzmittel und/oder zumindest ein flüssiges oder geschmolzenes Stoffgemisch umfassend mindestens einen Pflanzenschutzmittel aus dem Behälter 18, und das Gas aus dem Behälter 19 über die Leitungen 20 und 21 direkt einem geeigneten, z. B. statischen, Mischer 22 zugeführt und dort intensiv miteinander vermischt. Aus dem Mischer 22 wird das Flüssigkeits/Gas-Gemisch dann direkt dem Entspannungsorgan 23 zugeführt. Diese Ausführungsform erspart den Einsatz eines teuren Hochdruckbehälters (Autoklaven) und kann zudem zu einer Reduktion der Menge des eingesetzten Gases führen. Weiterhin wird der Prozess dadurch optimiert, dass eine zeitraubende Gleichgewichtseinstellung im Autoklaven - wie im Verfahren nach Figur 1 notwendig - durch eine schnellere Durchmischung im Mischer 22 ersetzt wird.

Die Flüssigkeit, enthaltend mindestens einen flüssigen oder geschmolzenen Pflanzenschutzmittel und/oder zumindest ein flüssiges oder geschmolzenes Stoffgemisch umfassend mindestens einen Pflanzenschutzmittel; kann im Verfahren gemäß Figur 2 in einem einfachen, optional beheizbaren Vorlagebehälter beliebiger Größe (Behälter 18) vorgelegt werden. Dieser Behälter 18 muss nicht druckstabil sein. Die Flüssigkeit aus dem Vorlagebehälter 18 kann mittels einer geeigneten Pumpe 24, z. B. einer Membrandosierpumpe, oder pneumatisch dem Mischer 22 zugeführt, werden dort mit dem Gas gemischt und anschließend dem Entspannungsorgan 23 zugeführt werden. Das Entspannungsorgan 23 und die Zuführung des Trägermaterials werden i. d. R. wie bei Figur 1 beschrieben verwendet. In der Ausführungsform gemäß Figur 2 kann der Sprühturm mit einer Möglichkeit zur kontinuierlichen bzw. diskontinuierlichen Abführung 15 der erfindungsgemäßen Absorbate versehen sein. Die Abführung der Absorbate kann mit an sich bekannten Techniken wie z. B. Förderschnecken erfolgen. Diese apparative Konfiguration erlaubt eine kontinuierliche Prozessführung. Dazu kann es notwendig sein, das Trägermaterial ebenfalls kontinuierlich zuzuführen. Die kann z. B. dadurch erfolgen, dass das Trägermaterial aus einem weiteren Vorratsbehälter 25 durch Luft oder Gas-Zufuhr oder mittels einer Förderschnecke direkt zur beabsichtigten Einrittsstelle am Sprühturm befördert wird. Hinsichtlich der geeigneten Einrittsstelle der Trägermaterials wurden zuvor bereits detaillierte Angaben gemacht. Die Abführung des Prozeßgases kann wie bei Figur 1 beschrieben erfolgen.

Die vorliegende Erfindung umfaßt auch Erzeugnisse für den Pflanzenschutz enthaltend zumindest ein erfindungsgemäßes Absorbat, beladen mit Pflanzenschutzmitteln. Unter Erzeugnissen für den Pflanzenschutz sind Zusammensetzungen zu verstehen, die neben zumindest einem erfindungsgemäßen Absorbat auch noch mindestens eine weitere Komponente enthalten, die nicht an den Träger des erfindungsgemäßen Absorbats gebunden sind. Dazu zählen Erzeugnisse, die geeignet sind einen Schädlingsbefall zu verhindern, zu kontrollieren oder zu bekämpfen und/oder Schäden bzw. Krankheiten an Pflanzen, Holz oder Holzprodukten die während des Wachstums, der Produktion, der Verarbeitung, der Lagerung, des Transports oder der Vermarktung auftreten können zu verhindern zu regulieren oder zu minimieren und/oder die Einwirkungen von Insekten, Spinnentieren oder sonstiger Schädlinge auf Nutztiere, welche mit den Pflanzen gefüttert werden, zu regulieren, zu minimieren oder zu verhindern. Dies schließt Zusammensetzungen ein, die für den Gebrauch als Insekten- oder Pflanzenwachstumsregler bestimmt sind sowie Entlaubungsmittel, Trocknungsmittel, Mittel für die Einstellung, Abschwächung oder das Verhindern des vorzeitigen Verfalls der Frucht und Substanzen zur Anwendung an Getreide entweder vor oder nach der Ernte um das Erntegut vor Beeinträchtigung während der Lagerung und des Transportes zu schützen. Weitere Details zur Definition, Nomenklatur und Charakterisierung von Erzeugnissen für den Pflanzenschutz kann dem Handbuch "PESTICIDE SPECIFICATIONS" Manual on Development and Use of FAO and WHO Specifications for Pesticides, Herausgegeben durch die World Health Organisation (WHO) und die FOOD and Agriculture Organization of the United States, Rom, 2002, ISBN 92-5-104857-6, entnommen werden.

Die erfindungsgemäßen Erzeugnisse für den Pflanzenschutz, können in fester, flüssiger, öliger oder harziger Form oder in Form von Dispersionen vorliegen. Bevorzugt handelt es sich um

- feste Formulierungen für den direkten Einsatz wie "dustable powders" (DP), "powders for dry seed treatment" (DS), "granules" (GR), "tablets for direct Application" (DT)
- feste Formulierungen zur Dispersion wie "wettable powders" (WP), "water dispersible powders for seed treatment" (WS), "water dispersible granules" (WG), "water dispersible tablets" (WT), "emulsufiable granules" (EG), "emulsifiable powders" (EP)
- feste Formulierungen zur Auflösung vor der Applikation wie "water soluble powders" (SP), "water soluble powders for seed treatment" (SS), "water soluble granules" (SG) "water soluble tablets" (ST) oder
- flüssige Formulierungen wie "aqueous suspension concentrates" (SC), "suspension concentrates for seed treatment" (FS), "Oil-based suspension concentrates" (OD), "aqueous suspo-emulsions" (SE).

Die zuvor genannten Formulierungsformen und insbesondere die verwendeten Abkürzungen entsprechen dem international anerkannten Sprachgebrauch. Details können dem Handbuch "PESTICIDE SPECIFICATIONS" Manual on Development and Use of FAO and WHO Specifications for Pesticides, Herausgegeben durch die World Health Organisation (WHO) und die FOOD and Agriculture Organization of the United States, Rom, 2002, ISBN 92-5-104857-6, Anhang E, entnommen werden. Besonders bevorzugt sind WP und WG-Formulierungen.

Die erfindungsgemäßen Erzeugnisse für den Pflanzenschutz können neben den erfindungsgemäßen Absorbaten, beladen mit zur Verwendung in Pflanzenschutzmitteln bestimmten Substanzen, weitere feste Füllstoffe wie z. B. Kalk, Tone, Naturprodukte weitere Hilfsstoffe wie z. B. Biozide, Verdickungsmittel, Frostschutzmittel, Bindemittel enthalten.

Die erfindungsgemäßen Erzeugnisse für den Pflanzenschutz können hergestellt werden, in dem zumindest ein erfindungsgemäßes Absorbat, beladen mit dem flüssigen Planzenschutzwirkstoff oder einem flüssigen Stoffgemisch umfassend zumindest einen flüssigen Pflanzenschutzmittelwirkstoff mit zumindest einem weiteren Bestandteil der Erzeugnisse für den Pflanzenschutz in Kontakt gebracht wird. Dies kann nach an sich bekannten Misch-Verfahren wie z.B. in Freifallmischern oder Zwangsmischern geschehen.

**Meßmethoden**

**Bestimmung der Porenvolumenverteilung**

Unter Mikroporenvolumen im Sinne der vorliegenden Erfindung wird das Volumen der Poren mit einem Porendurchmesser von 0,4 nm bis 2 nm verstanden. Das Mikroporenvolumen wird durch Stickstoffadsorption gemäß DIN 66135 mit dem Gerät ASAP 2400, Micromeritics, nach dem t-Verfahren bestimmt. Die Auswertung erfolgt volumetrisch unter Verwendung der t- Kurve nach Harkins-Jura. Für die Bestimmung des Mikroporenvolumens muß die Probe vorbehandelt werden. Dazu wird die Probe 24 h bei 105 °C vorgetrocknet und anschließend unter Vakuum bei 200 °C für die Dauer von 1 h ausgegast.

Als Meso- und Makroporenvolumen im Sinne der vorliegenden Erfindung ist das Porenvolumen zu verstehen, das von Poren mit einem Durchmesser zwischen 3,6 nm und 100 nm gebildet wird. Dieses Volumen wird unter Zuhilfenahme der Hg-Porosimetrie nach DIN 66133 mit dem Hg-Porosimeter Autopore-IV 9500 der Fa. Micromeritics bestimmt. Für die Berechnung wird der Kontaktwinkel des Quecksilbers mit 140° und dessen Oberflächenspannung mit 480 mN/m angenommen. Die Vorbehandlung der Probe erfolgt analog wie bei der Bestimmung des Mikroporenvolumens.

Das Gesamtporenvolumen setzt sich aus der Summe der Ergebnisse des oben beschriebenen Mikroporenvolumens - ermittelt mittels Stickstoffadsorption - und des Meso-/Makroporenvolumens - ermittelt mittels Quecksilberporosimetrie - zusammen.

Die Berechnung des Anteils an Mikroporenvolumen (Einheit = [%]) wird wie folgt durchgeführt:

$$Anteil\ an\ Mikroporenvolumen\ =\ \frac{Mikroporenvolumen}{Mikroporenvolumen + Meso-/Makroporenvolumen} \times 100$$

**Bestimmung der DBP-Aufnahme**

Die DBP-Aufnahme (DBP-Zahl), die ein Maß für die Saugfähigkeit der Fällungskieselsäure ist, wird in Anlehnung an die Norm DIN 53601 wie folgt bestimmt: 12.50 g pulverförmige oder kugelförmige Kieselsäure mit 0 - 10 % Feuchtegehalt (gegebenenfalls wird der Feuchtegehalt durch Trocknen bei 105 °C im Trockenschrank eingestellt) werden in die Kneterkammer (Artikel Nummer 279061) des Brabender-Absorptometer "E" gegeben (ohne Dämpfung des Ausgangsfilters des Drehmomentaufnehmers). Im Falle von Granulaten wird die Siebfraktion von 3,15 bis 1 mm (Edelstahlsiebe der Fa. Retsch) verwendet (durch sanftes Drücken der Granulate mit einem Kunststoffspatel durch das Sieb mit 3,15 mm Porenweite). Unter ständigem Mischen (Umlaufgeschwindigkeit der Kneterschaufeln 125 U/min) tropft man bei Raumtemperatur durch den "Dosimaten Brabender T 90/50" Dibutylphthalat mit einer Geschwindigkeit von 4 ml/min in die Mischung. Das Einmischen erfolgt mit nur geringem Kraftbedarf und wird anhand der Digitalanzeige verfolgt. Gegen Ende der Bestimmung wird das Gemisch pastös, was mittels eines steilen Anstieges des Kraftbedarfs angezeigt wird. Bei einer Anzeige von 600 digits (Drehmoment von 0.6 Nm) wird durch einen elektrischen Kontakt sowohl der Kneter als auch die DBP-Dosierung abgeschaltet. Der Synchronmotor für die DBP-Zufuhr ist mit einem digitalen Zählwerk gekoppelt, so dass der Verbrauch an DBP in ml abgelesen werden kann.

Die DBP-Aufnahme wird in der Einheit [g/100g] ohne Nachkommastellen angegeben und anhand der folgenden Formel berechnet:

$$DBP\ =\ \frac{V*D*100}{E}\ +\ K$$

mit DBP = DBP-Aufnahme in g/100g

$V$ = Verbrauch an DBP in ml

$D$ = Dichte von DBP in g/ml (1,047 g/ml bei 20 °C)

$E$ = Einwaage an Kieselsäure in g

$K$ = Korrekturwert gemäß Feuchtekorrekturtabelle in g/100g

Die DBP-Aufnahme ist für die wasserfreie, getrocknete Kieselsäure oder Silicagel definiert. Bei Verwendung von feuchten Fällungskieselsäuren oder Silicagelen ist der Korrekturwert K für die Berechnung der DBP-Aufnahme zu berücksichtigen. Dieser Wert kann anhand der folgenden Korrekturtabelle ermittelt werden, z. B. würde ein Wassergehalt der Kieselsäure von 5.8 % einen Zuschlag von 33 g/(100 g) für die DBP-Aufnahme bedeuten. Die Feuchte der Kieselsäure wird gemäß der nachfolgend beschriebenen Methode "Bestimmung der Feuchte bzw. des Trockenverlusts" ermittelt.

**Feuchtekorrekturtabelle für Dibutylphthalataufnahme -wasserfrei-**

| % Feuchte | .% Feuchte | | | | |
|---|---|---|---|---|---|
| | .0 | .2 | .4 | .6 | .8 |
| 0 | 0 | 2 | 4 | 5 | 7 |
| 1 | 9 | 10 | 12 | 13 | 15 |
| 2 | 16 | 18 | 19 | 20 | 22 |
| 3 | 23 | 24 | 26 | 27 | 28 |
| 4 | 28 | 29 | 29 | 30 | 31 |
| 5 | 31 | 32 | 32 | 33 | 33 |
| 6 | 34 | 34 | 35 | 35 | 36 |
| 7 | 36 | 37 | 38 | 38 | 39 |
| 8 | 39 | 40 | 40 | 41 | 41 |
| 9 | 42 | 43 | 43 | 44 | 44 |
| 10 | 45 | 45 | 46 | 46 | 47 |

**Bestimmung der Feuchte bzw. des Trocknungsverlusts**

Die Feuchte oder auch Trocknungsverlust (TV) von Kieselsäuren wird in Anlehnung an ISO 787-2 nach 2 stündiger Trocknung bei 105 °C bestimmt. Dieser Trocknungsverlust besteht überwiegend aus Wasserfeuchtigkeit.

In ein trockenes Wägeglas mit Schliffdeckel (Durchmesser 8 cm, Höhe 3 cm) werden 10 g der pulverförmigen, kugelförmigen oder granulären Kieselsäure auf 0,1 mg genau eingewogen (Einwaage E). Die Probe wird bei geöffnetem Deckel 2 h bei 105 ± 2 °C in einem Trockenschrank getrocknet. Anschließend wird das Wägeglas verschlossen und in einem Exsikkatorschrank mit Kieselgel als Trocknungsmittel auf Raumtemperatur abgekühlt.

Das Wägeglas wird zur Bestimmung der Auswaage A auf der Präzisionswaage auf 0,1 mg genau ausgewogen. Man bestimmt die Feuchte (TV) in % gemäß

$$TV = (1 - A / E) * 100,$$

wobei A = Auswaage in g und E = Einwaage in g bedeuten.

**Bestimmung der Stampfdichte**

Die Bestimmung der Stampfdichte erfolgt in Anlehnung an DIN EN ISO 787-11.

Eine definierte Menge einer zuvor nicht gesiebten Probe wird in einen graduierten Glaszylinder eingefüllt und mittels eines Stampfvolumeters einer festgelegten Anzahl von Stampfungen unterzogen. Während der Stampfung verdichtet sich die Probe. Als Ergebnis der durchgeführten Untersuchung erhält man die Stampfdichte.

Die Messungen werden auf einem Stampfvolumeter mit Zählwerk der Fa. Engelsmann, Ludwigshafen, Typ STAV 2003, durchgeführt.

Zunächst wird ein 250 ml Glaszylinder auf einer Präzisionswaage tariert. Anschließend werden 200 ml Kieselsäure mit Hilfe eines Pulvertrichters so in den tarierten Messzylinder eingefüllt, dass sich keine Hohlräume bilden. Dies wird durch Neigen und Drehen des Zylinders um seine Längsachse während des Einfüllens erreicht. Anschließend wird die Probenmenge auf 0,01 g genau gewogen. Danach wird leicht an den Zylinder geklopft, so dass die Oberfläche der Kieselsäure im Zylinder waagrecht ist. Der Messzylinder wird in den Messzylinderhalter des Stampfvolumeters eingesetzt und 1250 mal gestampft. Das Volumen der gestampften Probe wird nach einmaligem Stampfdurchgang auf 1 ml genau abgelesen.

Die Stampfdichte D(t) berechnet sich wie folgt:

$$D(t) = m * 1000 / V$$

D(t): Stampfdichte [g/l]
V: Volumen der Kieselsäure nach dem Stampfen [ml]
m: Masse der Kieselsäure [g]

Die nachfolgenden Beispiele dienen ausschließlich der näheren Erläuterung der vorliegenden Erfindung, schränken diese jedoch in keiner Weise ein.

**Bestimmung der Dichte der flüssigen zur Verwendung in Pflanzenschutzmitteln bestimmten Substanz oder des flüssigen zur Verwendung in Pflanzenschutzmitteln bestimmten Substanzgemisches**

Die Bestimmung erfolgt mittels eines Dichte Aräometers nach DIN 12791, Teil 3. Die Bezugstemperatur beträgt 20 °C.

**Beispiele:**

Zur Herstellung der Wirkstoffabsorbate wird Sipernat 22 S mit einem Mikroporenvolumen < 2 nm von 0,02 ml/g und einem Meso- / Makroporenvolumen von 3,6 nm - 100 nm von 1,38 ml/g verwendet. Dies entspricht einem Anteil an Mirkoporenvolumen von 1,43 %. Die DBP des verwendeten Sipernat 22 S betrug 265 g/100g.

**Beispiel 1:**

Herstellung eines Wirkstoffabsorbats geeignet zum direkten Einsatz als WP oder zur Weiterverabeitung zum WP oder zum WG.
Chemikalien:

- Sipernat 22 S 200 g
- Malathion (Fyfanon 96 - 97 %, Cheminova) 756,5 g
- Berol 916 (Akzo Nobel) 43,5 g
- Empikol LZ (Albright & Wilson) 43,5 g

Das auf 50 °C vorerwärmte Netzmittel Berol 916 wird unter Rühren im Malathion gelöst. Die Dichte der Lösung bei 20 °C beträgt 1,222 g/ml. Die flüssige, auf Raumtemperatur abgekühlte Lösung wird aus einem Vorlagebehälter einem druckstabilen statischen Mischer zugeführt, in den gleichzeitig verdichtetes Kohlendioxid dosiert wird. Die Bedingungen im statischen Mischer werden so gewählt, dass Kohlendioxid im überkritischen Zustand vorliegt (p = 100 bar; T = 32 °C). Flüssigkeit und $CO_2$ werden intensiv miteinander vermischt, das überkritische Gas löst sich zu einem gewissen Teil in der Flüssigkeit, wodurch eine gasgesättigte Lösung entsteht.
Die gasgesättigte Lösung wird schließlich über eine Hochdruckdüse in den Sprühturm entspannt. In den durch die Düse geformten Tröpfchen befindet sich gelöstes Kohlendioxid, dass bei der Entspannung auf Atmosphärendruck schlagartig aus diesen entweicht und die Tröpfchen weiter zerteilt. In diesen sehr feinen Tröpfchennebel hinein wird gleichzeitig in einem Strom aus $CO_2$-Gas fluidisiertes Sipernat 22 S als Trägerstoff eindosiert. Eine turbulente Strömung um die Hochdruckdüse sorgt für einen intensiven Kontakt zwischen Flüssigkeitströpfchen und Sipernat 22 S und die Flüssigkeit wird an den Trägerstoff gebunden. Das entstandene Pulver sedimentiert im Sprühturm und wird batchweise ausgetragen.
In das so erhaltene Wirkstoffabsorbat mit einer Massenkonzentration an zur Verwendung in Pflanzenschutzmitteln bestimmten Substanzen (Malathion + Berol 916) vor Normierung von $X_{vor}$ = 80 % und nach Normierung von $X_{norm.}$ = 76,6 % bezogen auf die Gesamtmasse des Absorbats wird das feste pulverförmige Dispergiermittel Empikol LZ mechanisch untergemischt und somit eine fertige Pflanzenschutzmittelformulierung hergestellt.

**Vergleichsbeispiel:**

Herstellung eines Wirkstoffabsorbats gemäß einem herkömmlichen Verfahren des Standes der Technik
Chemikalien:

◦ Sipernat 22 S 31 g
◦ Malathion (Fyfanon 96 - 97 %, Cheminova) 52,1 g
◦ Berol 916 (Akzo Nobel) 3,0 g
◦ Empikol LZ (Albright & Wilson) 3,0 g

Gemäß den Mengenangaben in vorstehender Liste werden Sipernat 22 S sowie das Dispergiermittel Empikol LZ in einer 500 ml Quickfit-Glasrührapparatur mit KPG-Rührer vorgelegt und kurz vermischt. Hierzu wird eine - entsprechend Beispiel 1 hergestellte - Lösung aus Malathion und dem Netzmittel Berol 916 unter Rühren innerhalb von 30 Minuten zugetropft und 5 Minuten nachgerührt. Das erhaltene Absorbat wies einen an zur Verwendung in Pflanzenschutzmitteln bestimmten Substanzen (Malathion + Berol 916) von $X_{vor}$ = 64 % auf. Dies entspricht einem normierten Massegehalt von $X_{norm}$ = 59,3 %.
Eine Erhöhung der im Vergleichsbeispiel zugesetzten Menge an Flüssigkeit auf die in Beispiel 1 angegebene prozentuale Menge führte bei diesem herkömmlichen Verfahren zu einer Überladung einzelner Kieselsäurepartikel und dadurch zu einer stark verklebten aufagglomerierten Mischung die nicht weiter verwendbar war. Im Gegensatz dazu wurden im Beispiel 1 fließfähige, äußerlich trockene agglomerierte Absorbatpartikel erhalten welche zur Weiterverarbeitung oder, je nach Agglomeratgröße, zum direkten Einsatz als WP oder WG geeignet sind.

**Patentansprüche**

**1.** Absorbat,
**dadurch gekennzeichnet,**
**dass** es

    - zumindest ein Trägermaterial ausgewählt aus der Gruppe bestehend aus Fällungskieselsäure, pyrogenen Kieselsäuren, Kieselgelen, natürlichen Tonen, modifizierten natürlichen Tonen oder Diatmoeenerde, sowie
    - zumindest einen flüssigen Pflanzenschutzmittelwirkstoff oder ein Stoffgemisch enthaltend zumindest einen flüssigen Pflanzenschutzmittelwirkstoff,

umfasst, und dass der Anteil des flüssigen Pflanzenschutzmittelwirkstoffs bzw. bei Gemischen von zumindest zwei flüssigen Pflanzenschutzmittelwirkstoffen, die Gesamtmenge der flüssigen Pflanzenschutzmittelwirkstoffe, $X_{norm.}$ = 70 % bis 99 % beträgt, und das Trägermaterial einen Anteil an Mikroporenvolumen bezogen auf das Gesamtporenvolumen kleiner gleich 10 Vol % hat.

**2.** Absorbat nach Anspruch 1 , **dadurch gekennzeichnet,**
**dass** das Trägermaterial eine Dibutylphtalat-Aufnahme (DBP) betimmt in Anlehnung an die Norm DIN 53601 > 150 g/100g aufweist.

**3.** Absorbat nach einem der Ansprüche 1 oder 2
**dadurch gekennzeichnet,**
**dass** das Trägermaterial eine Fällungskieselsäure, eine pyrogene Kieselsäure oder ein Kieselgel ist.

**4.** Absorbat nach einem der Ansprüche 1 bis 3,
**dadurch gekennzeichnet,**
**dass** das Trägermaterial eine Stampfdichte kleiner 200 g/l, bevorzugt < 150 g/l, besonders bevorzugt < 100 g/l aufweist.

**5.** Absorbat nach einem der Ansprüche 1 bis 4,
**dadurch gekennzeichnet,**
**dass** der Anteil des flüssigen Pflanzenschutzmittelwirkstoffs bzw. bei Gemischen von zumindest zwei dieser Substanzen, die Gesamtmenge dieser Substanzen, $X_{norm.}$ = 75 bis 95 % beträgt.

**6.** Absorbat nach einem der Ansprüche 1 bis 5, **dadurch gekennzeichnet, dass** es sich um eine WG- oder WP-Formulierung handelt.

**7.** Verfahren zur Herstellung von festen Pflanzenschutzmittelabsorbaten und/oder Erzeugnissen für den Pflanzenschutz gemäß der Ansprüche 1 bis 6 umfassend zumindest die Schritte:

- Bereitstellen einer Flüssigkeit, enthaltend mindestens einen flüssigen, Pflanzenschutzmittelwirkstoff und/oder zumindest ein flüssiges Stoffgemisch, umfassend mindestens einen flüssigen Pflanzenschutzmittelwirkstoff in einem Vorlagebehälter,
- Mischen und/oder teilweises Auflösen eines Gases, bevorzugt unter erhöhtem Druck, besonders bevorzugt im überkritischen Zustand, insbesondere $CO_2$ bei einem Druck p > 73,83 bar und einer Temperatur T > 31,04°C, in der Flüssigkeit, bevorzugt in einem Mischer und/oder Druckbehälter,
- Zuführen der Flüssigkeits/Gas-Lösung/Schmelze zu einem Entspannungsorgan,
- Leiten der Flüssigkeits/Gas-Lösung bzw. der Flüssigkeits/Gas-Schmelze durch ein Entspannungsorgan zur Entspannung der Flüssigkeits/Gas-Lösung bzw. der Flüssigkeits/Gas-Schmelze,
- Zumischen von zumindest einem festen, pulverförmigen Träger, mit einem Anteil an Mikroporenvolumen bezogen auf das Gesamtporenvolumen kleiner gleich 10 Vol %, zu der entspannten Flüssigkeits/Gas-Lösung bzw. der Flüssigkeits/Gas-Schmelze.

**8.** Verfahren nach Anspruch 7 **dadurch gekennzeichnet, dass** das Trägermaterial eine DBP > 150 g/100g aufweist.

**9.** Verfahren nach einem der Ansprüche 7 oder 8
**dadurch gekennzeichnet,**
**dass** das Trägermaterial eine Fällungskieselsäure, eine pyrogene Kieselsäure oder ein Kieselgel ist.

**10.** Verfahren nach einem der Ansprüche 7 bis 9,
**dadurch gekennzeichnet,**
**dass** das Trägermaterial eine Stampfdichte kleiner 200 g/l, bevorzugt < 150 g/l, besonders bevorzugt < 100 g/l aufweist.

**11.** Erzeugnisse für den Pflanzenschutz umfassend zumindest ein Absorbat nach einem der Ansprüche 1 bis 5.

**12.** Erzeugnis für den Pflanzenschutz nach Anspruch 11, **dadurch gekennzeichnet, dass** es sich um eine WP- oder WG-Formulierung handelt.

**13.** Verwendung eines Absorbats nach einem der Ansprüche 1 bis 6 zur Herstellung von Erzeugnissen für den Pflanzenschutz.

**14.** Verwendung zumindest einer Fällungskieselsäure, pyrogenen Kieselsäure oder eines Kieselgels, mit einem Anteil an Mikroporenvolumen bezogen auf das Gesamtporenvolumen kleiner gleich 10 Vol %, zur Herstellung von Adsorbaten mit einem Anteil an einem flüssigen Pflanzenschutzmittelwirkstoff bzw. bei Gemischen von zumindest zwei flüssigen Pflanzenschutzmittelwirkstoffen, mit einer Gesamtmenge dieser Substanzen, von $X_{norm}$ = 70 bis 99 %.

**Claims**

**1.** Absorbate,
**characterized in**
**that** it includes

- at least one carrier material chosen from the group consisting of precipitated silicas, pyrogenic silicas, silica gels, natural clays, modified natural clays and diatomaceous earths, and
- at least one liquid plant protection composition active substance or a mixture of substances comprising at least one liquid plant protection composition active substance, and
- **that** the proportion of the liquid plant protection composition active substance or, in mixtures of at least two liquid plant protection composition active substances, the total amount of the liquid plant protection composition active substances, $X_{stand.}$, is 70% to 99%, and the carrier material exhibits a proportion of micropore volume, based on the total pore volume, of less than or equal to 10% by volume.

2. Absorbate according to Claim 1,
   **characterized in**
   **that** the carrier material exhibits a dibutyl phthalate absorption (DBP), determined according to Standard DIN 53601, of > 150 g/100 g.

3. Absorbate according to either of Claims 1 and 2,
   **characterized in**
   **that** the carrier material is a precipitated silica, a pyrogenic silica or a silica gel.

4. Absorbate according to one of Claims 1 to 3,
   **characterized in**
   **that** the carrier material exhibits a tapped density of less than 200 g/l, preferably < 150 g/l, particularly preferably < 100 g/l.

5. Absorbate according to one of Claims 1 to 4,
   **characterized in**
   **that** the proportion of the liquid plant protection composition active substances or, in mixtures of at least two of these substances, the total amount of these substances, $X_{stand.}$, is 75 to 95%.

6. Absorbate according to one of Claims 1 to 5, **characterized in that** a WG or WP formulation is involved.

7. Process for the preparation of solid absorbates for plant protection compositions and/or products for plant protection according to Claims 1 to 6, comprising at least the stages:

   - providing a liquid, comprising at least one liquid plant protection composition active substance and/or at least one liquid mixture of substances comprising at least one liquid plant protection composition active substance, in a feed vessel,
   - mixing and/or partly dissolving a gas, preferably under elevated pressure, particularly preferably in the super-critical condition, in particular $CO_2$ at a pressure p > 73.83 bar and at a temperature T > 31.04°C, in the liquid, preferably in a mixer and/or pressurized vessel,
   - feeding the liquid/gas solution/melt to an expansion element,
   - conveying the liquid/gas solution or the liquid/gas melt through an expansion element to expand the liquid/gas solution or the liquid/gas melt,
   - adding at least one solid pulverulent carrier material, having a proportion of micropore volume, based on the total pore volume, of less than or equal to 10% by volume, to the expanded liquid/gas solution or liquid/gas melt.

8. Process according to Claim 7,
   **characterized in**
   **that** the carrier material exhibits a DBP of > 150 g/100 g.

9. Process according to either of Claims 7 and 8,
   **characterized in**
   **that** the carrier material is a precipitated silica, a pyrogenic silica or a silica gel.

10. Process according to one of Claims 7 to 9,
    **characterized in**
    **that** the carrier material exhibits a tapped density of less than 200 g/l, preferably < 150 g/l, particularly preferably < 100 g/l.

11. Products for plant protection including at least one absorbate according to one of Claims 1 to 5.

12. Product for plant protection according to Claim 11, **characterized in that** it is a WP or WG formulation.

13. Use of an absorbate according to one of Claims 1 to 6 for the preparation of products for plant protection.

14. Use of at least one precipitated silica, pyrogenic silica or a silica gel, having a proportion of micropore volume, based on the total pore volume, of less than or equal to 10% by volume, for the preparation of adsorbates with a proportion of a liquid plant protection composition active substance or, in mixtures of at least two liquid plant protection composition active substances, with a total amount of these substances from $X_{stand.}$ = 70 to 99%.

**Revendications**

1. Absorbat, **caractérisé en ce qu'**il comprend :

   - au moins un matériau support choisi dans le groupe constitué par la silice précipitée, les silices pyrogénées, les gels de silice, les argiles naturelles, les argiles naturelles modifiées ou les terres de diatomée, et
   - au moins un agent phytosanitaire liquide ou un mélange de substances contenant au moins un agent phytosanitaire liquide, et
   - **en ce que** la proportion de l'agent phytosanitaire liquide ou, dans le cas de mélanges d'au moins deux agents phytosanitaires liquides, la quantité totale des agents phytosanitaires liquides, $X_{norm}$ = 70 % à 99 %, et le matériau support présente une proportion du volume des micropores par rapport au volume poreux total inférieure ou égale à 10 % en volume.

2. Absorbat selon la revendication 1, **caractérisé en ce que** le matériau support présente une absorption de phtalate de dibutyle (DBP) déterminée selon la norme DIN 53601 > 150 g/100 g.

3. Absorbat selon l'une quelconque des revendications 1 ou 2, **caractérisé en ce que** le matériau support est une silice précipitée, une silice pyrogénée ou un gel de silice.

4. Absorbat selon l'une quelconque des revendications 1 à 3, **caractérisé en ce que** le matériau support présente une densité tassée inférieure à 200 g/l, de préférence < 150 g/l, de manière particulièrement préférée < 100 g/l.

5. Absorbat selon l'une quelconque des revendications 1 à 4, **caractérisé en ce que** la proportion de l'agent phytosanitaire liquide ou, dans le cas de mélanges d'au moins deux de ces substances, la quantité totale de ces substances, $X_{norm}$ = 75 à 95 %.

6. Absorbat selon l'une quelconque des revendications 1 à 5, **caractérisé en ce qu'**il s'agit d'une formulation WG ou WP.

7. Procédé de fabrication d'absorbats d'agents phytosanitaires solides et/ou de produits pour la protection des plantes selon les revendications 1 à 6, comprenant au moins les étapes suivantes :

   - la préparation d'un liquide, contenant au moins un agent phytosanitaire liquide et/ou au moins un mélange de substances liquide, comprenant au moins un agent phytosanitaire liquide, dans un contenant de stockage,
   - le mélange et/ou la dissolution partielle d'un gaz, de préférence sous pression élevée, de manière particulièrement préférée à l'état supercritique, notamment $CO_2$ à une pression p > 73,83 bar et à une température T > 31,04 °C, dans le liquide, de préférence dans un mélangeur et/ou un contenant sous pression,
   - l'introduction de la solution/masse fondue de liquide/gaz dans un dispositif de détente,
   - l'acheminement de la solution de liquide/gaz ou de la masse fondue de liquide/gaz au travers d'un dispositif de détente pour la détente de la solution de liquide/gaz ou de la masse fondue de liquide/gaz,
   - l'incorporation d'au moins un support pulvérulent solide ayant une proportion du volume des micropores par rapport au volume poreux total inférieure ou égale à 10 % en volume dans la solution de liquide/gaz ou la masse fondue de liquide/gaz.

8. Procédé selon la revendication 7, **caractérisé en ce que** le matériau support présente un DBP > 150 g/100 g.

9. Procédé selon l'une quelconque des revendications 7 ou 8, **caractérisé en ce que** le matériau support est une silice précipitée, une silice pyrogénée ou un gel de silice.

10. Procédé selon l'une quelconque des revendications 7 à 9, **caractérisé en ce que** le matériau support présente une densité tassée inférieure à 200 g/l, de préférence < 150 g/l, de manière particulièrement préférée < 100 g/l.

11. Produits pour la protection des plantes, comprenant au moins un absorbat selon l'une quelconque des revendications 1 à 5.

**12.** Produit pour la protection des plantes selon la revendication 11, **caractérisé en ce qu'**il s'agit d'une formulation WP ou WG.

**13.** Utilisation d'un absorbat selon l'une quelconque des revendications 1 à 6 pour la fabrication de produits pour la protection des plantes.

**14.** Utilisation d'au moins une silice précipitée, une silice pyrogénée ou un gel de silice, ayant une proportion du volume des micropores par rapport au volume poreux total inférieure ou égale à 10 % en volume, pour la fabrication d'adsorbats contenant une proportion d'un agent phytosanitaire liquide ou, dans le cas de mélanges d'au moins deux agents phytosanitaires liquides, une quantité totale de ces substances, $X_{norm}$ = 70 à 99 %.

**Figur 1:**

**Figur 2:**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6869914 B
- DE 1619865
- EP 1319336 A1
- WO 9917868 A

**In der Beschreibung aufgeführte Nicht-Patentliteratur**

- **ANHANG E.** *FOOD and Agriculture Organization of the United States, Rom,* 2002, ISBN 92-5-104857-6
- *FOOD and Agriculture Organization of the United States, Rom,* 2002, ISBN 92-5-104857-6